# EUROPEAN PATENT APPLICATION

(11) **EP 1 094 411 A1**
(43) Date of publication of application: **25.04.2001**
(21) Application number: 99120087.4
(22) Date of filing: 20.10.1999
(51) Int. Cl.: G06F 17/30

(54) **Handling of different versions of a document**

(71) Applicant: Sun Microsystems, Inc., Palo Alto, California 94303-4900 (US)
(72) Inventor: Breuer, Matthias, 21220 Seevetal (DE)
(74) Representative: Betten & Resch

(57) **Abstract**

A method for handling different versions of a document in a computer system comprising a storage medium, wherein said different versions include one current version and at least one earlier version, said method comprising the steps of assigning a storage unit in said storage medium of said computer system for storing said document, saving said current version of said document in a current version storage sub-unit of said storage unit assigned for storing said document, and saving each of said earlier versions of said document in a corresponding earlier version storage sub-unit of said storage unit assigned for storing said document, wherein each of said earlier versions is saved in its entirety in said corresponding earlier version storage sub-unit. Furthermore, a computer program for carrying out this method and a data carrier storing such a program are provided.

## Description

The present invention relates to a method of handling different versions of a document in a computer system and a computer program for carrying out said method.

In a computer system different versions of a document, one current version and one or more earlier versions, may have to be handled, for example for purposes of documenting the historical development of such document. Documents are in the following understood to be data files suitable for being stored and processed on computer systems in general, including text documents, spreadsheets, tables, pictures or any other set of data representing information.

Computer programs for handling, i.e. storing and retrieving, that means opening or displaying, different versions of a document already exist in the prior art. Such computer programs store the different versions of a document in the following manner: The area of the storage medium in which the relevant information concerning the document is stored will be a storage unit which can be divided into storage sub-units. The entire current version of the document is stored in a storage sub-unit assigned to the document. The earlier versions are not stored in their entirety. Instead, each of the earlier versions of the document is compared with the next newer version of this document and only the differences of each earlier version to the next newer version are stored, together with information about the respective position of each of the differences, in the storage sub-unit of the storage unit assigned to the document.

For example: A document exists in seven versions, i.e. the seventh version is the current version and the first to sixth version are earlier versions. If the first version of the document shall, on demand of a user of the computer system, be displayed on the monitor of this computer system, the current seventh version will be opened and any differences between the seventh and the sixth version, between the sixth and the fifth version, between the fifth and the fourth version, between the fourth and the third version, between the third and the second version and between the second and the first version, which are all stored in the storage sub-unit of the storage unit assigned to this document, are inserted in the current seventh version in order to retrieve the first version. That means the first version is restored or reconstructed successively from the current seventh version and the differences of all of the other earlier versions relatively to each other.

In a document which comprises, for example, tables the differences between the various earlier versions of this document may, for example, reside only in the fourth row in the fifth table of the document. Then the content of each earlier version's fourth row of the fifth table the information is stored, together with the information that this piece of data belongs to the fourth row of the fifth table, not to any other row or column of any other table, and with the information that it belongs to a certain earlier version, not any other earlier version. The rest of the earlier versions is not physically stored.

This process of storing and retrieving earlier versions of a document is time consuming, since several processing steps have to be performed in order to restore the desired earlier version. In addition, if problems occur in storing or retrieving the current version of the document the same problems apply to the retrieval of any earlier version, since the retrieval of any earlier version depends on the current version's successful retrieval.

It is an object of the present invention to provide a method for improved storage and retrieval of earlier versions of a document. In particular, it is an object of the present invention to provide a method for faster and more secure retrieval of earlier document versions.

These objects are achieved by a method for handling different versions of a document in a computer system comprising a storage medium, wherein said different versions include one current version and at least one earlier version, said method comprising the steps of assigning a storage unit in said storage medium of said computer system for storing said document, saving said current version of said document in a current version storage sub-unit of said storage unit assigned for storing said document, and saving each of said earlier versions of said document in a corresponding earlier version storage sub-unit of said storage unit assigned for storing said document, wherein each of said earlier versions is saved in its entirety in said corresponding earlier version storage sub-units.

A computer system which is able to carry out the inventive method comprises a processor, a storage medium, an input device and an output device. The storage medium can be a hard disk, a floppy disk, a tape or anything comparable. This storage medium can belong to the computer system itself, but it may as well belong to another computer system and be connected via a data line or a network to the computer system itself.

Documents according to the present invention are understood to be data files. These data files may include any information like, for example, text, tables, pictures and sound. These data files may first be edited, that means changed or amended, by a user and then saved in the storage medium of the computer system as described above. This leads to one current version and one or more earlier versions of a document.

For storing and retrieving a data file according to the present invention the processor of the computer system chooses or creates a storage unit for all information concerning a certain data file, that means a certain document, on the storage medium of the computer system. This storage unit is then subdivided in at least two storage sub-units. In the first storage sub-unit the first, that means the earliest version of the document is stored, possibly with any further relevant information and data concerning this first version. For example, the text information, the picture information and the table information concerning the first version of the document are stored in the first storage sub-unit. If a new, second version of the document is created and saved, this second version, and possibly relevant information corresponding thereto, is stored in a second storage sub-unit. If no further versions exist, the second version is the current version. Each further amended version is stored in the same way in its entirety in a separate storage sub-unit.

In the context of the present invention the term storage unit characterizes a portion of the storage medium of the computer system which is assigned to a document. Storage units may be physically differentiated within the storage medium, but may as well be merely differentiated by the administration of the storage medium, since this is possible by employing for example corresponding software applications. Storage sub-units are portions of the storage medium which are assigned by any means to a higher ranking storage unit on the same storage medium. The organization of the storage medium in storage units and storage sub-units allows to distinguish data stored in various storage sub-units and nevertheless recognize their common origin.

In addition to the current version of a document historic information about this current version may be saved in the current version storage sub-unit and historic information about each of said earlier versions is likewise saved in the respective corresponding earlier version storage sub-unit. The historic information about a document version may contain at least its saving date. It is possible that this historic information contains also other information which allows the user to identify or characterize the respective version, like names of individuals who have worked on this version.

The method for handling different versions of a document may comprise the further steps of displaying on demand of a user of said computer system a listing showing at least the historic information about the different document versions, and loading any of said different versions for further processing in response to a user's choice from said listing. This allows the user to decide quickly about the version he would like to have output to any output or storage device, like a screen, a printer or another storage medium.

In another embodiment of the inventive method the earlier versions of a document are saved in a compressed form in the corresponding earlier version storage sub-units. This reduces significantly the required storage space. Suitable compression programs allow to reduce the required storage space by a factor of between two and four. Herein, a solution may be implemented which allows, possibly in response to a user's choice, that only predetermined parts of the documents, for example pictures, are compressed.

The method according to the present invention further may comprise the additional step of identifying and displaying amendments in the different versions of a document on demand of a user together with the date of said amendments. This step of identifying and displaying amendments may also comprise the identification and display of the author of said amendments. In addition, the method may allow to display any further information associated with the amendments like comments regarding the amendments or the date of first saving.

The method of the present invention may be implemented in a computer program, including comprehensive office applications such as the programs of Lotus, Microsoft and StarOffice. Such a computer program may be stored on any common data carrier like, for example, a floppy disk or a compact disk (CD), as well as on any common computer system's storage facilities like hard disks. Therefore, the present invention also relates to a data carrier for storing a computer program for carrying out the inventive method. The present invention also relates to a method for using a computer system for carrying out the presented inventive method.

The following example describes an embodiment of the present invention and compares this solution with a prior art solution. However, it is understood that the invention is not limited to this example.

For example, the user of a computer system creates a text document including a picture and a table. Then the user saves this document on the hard disk of the computer system. The processor of the computer system chooses or even physically creates, that means assigns, a storage unit on the hard disk of the computer system corresponding to the new document, identified for example by its name. Then a first storage sub-unit is created in this storage unit for storing the now first version of this document and for storing all relevant information concerning this version. In another example it is also possible to create any storage sub-units only if a second version comes into existence.

One embodiment of the present invention is in the following further described along figures 1 to 7. Herein, the figures show:
- Fig. 1:: A diagram representing an example for a computer system being usable in the scope of the present invention.
- Fig. 2:: A diagram representing the storing of different types of content in one storage sub-unit of a storage unit on a storage medium of a computer system according to the present invention.
- Fig. 3:: A diagram representing the storing of different document versions according to a prior art solution.
- Fig. 4:: A diagram representing the storing of different document versions according to the present invention.
- Fig. 5:: A diagram representing the compression of different document versions according to the present invention according to Fig. 3.
- Fig. 6:: A diagram showing the retrieval of earlier document versions employing the prior art solution described in Fig. 2.
- Fig. 7:: A diagram showing the retrieval of earlier document versions employing the present invention described in Fig. 3 and 4.

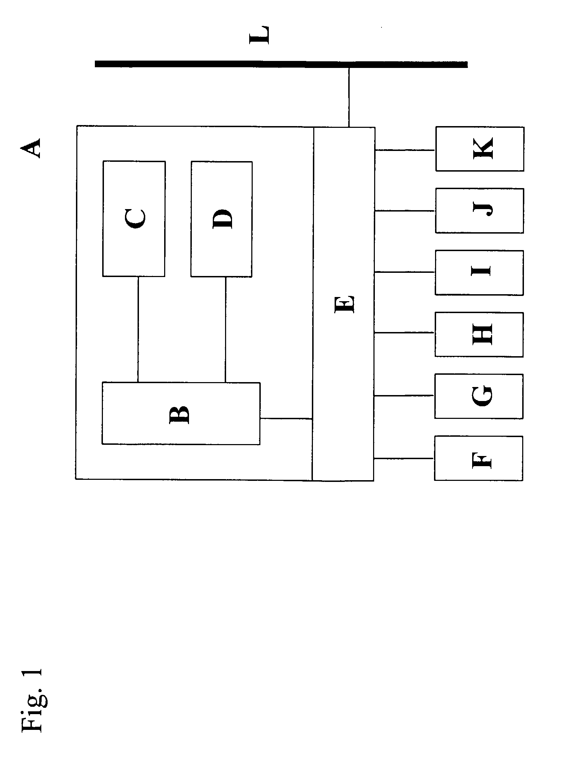

Fig. 1 shows a computer system A suitable to be used in the scope of the present invention. This computer system comprises a processor B, memories C, D and an i/o interface E. The memory of the computer system is divided in this example into a volatile memory C, like a working memory, and a non-volatile memory D, like a hard disk. Via the i/o interface E the computer system may, for example, be connected with input/output devices F to L. Common input/output devices are a keyboard F, a monitor G and a printer H. Other input devices like mouse I, scanner J and CD-ROM K are also possible. Frequently, the computer system is also connected to a network L via this i/o interface E.

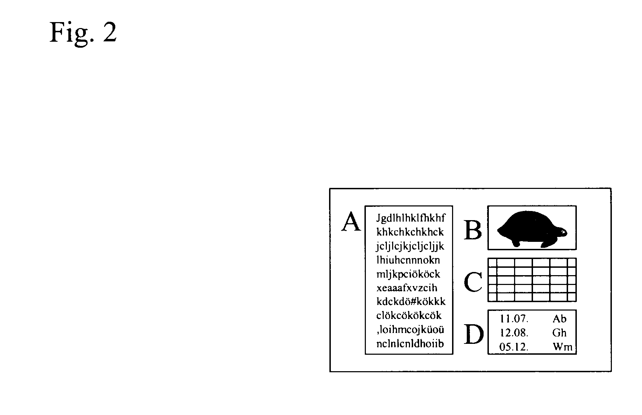

Fig. 2 shows an exemplary storage sub-unit of a storage unit in a storage medium of a computer system destined to store the first version of a document. This document includes text, tables and pictures. In the shown storage sub-unit the whole first document version is stored together with historic information and format information concerning the first document version. This different information is stored within the storage sub-unit in a certain sequence and in a degree of separation which allows its quick distinction. For this purpose different types of content are defined. In this example, the text and the format of the text, the tables and the pictures belong to one type of content and are stored together at position or address area A. The pictures belong to another type of content and are stored in area B. The tables of the document belong to yet another type of content and are stored under C. Finally, the historic information regarding the document version is stored in area D. The historic information may include data about the user who created this document version, its saving date, its printing date or any other relevant information about this document version.

These steps will be taken automatically by the processor of a computer system operating under a software program according to the present invention, the user only has to press the save button on his keyboard.

If a user opens, edits - amends or changes - and saves a version of the document another entire version of this document will be created automatically in the computer system. This newer version of the document will be stored in a new storage sub-unit of the storage unit assigned to this document.

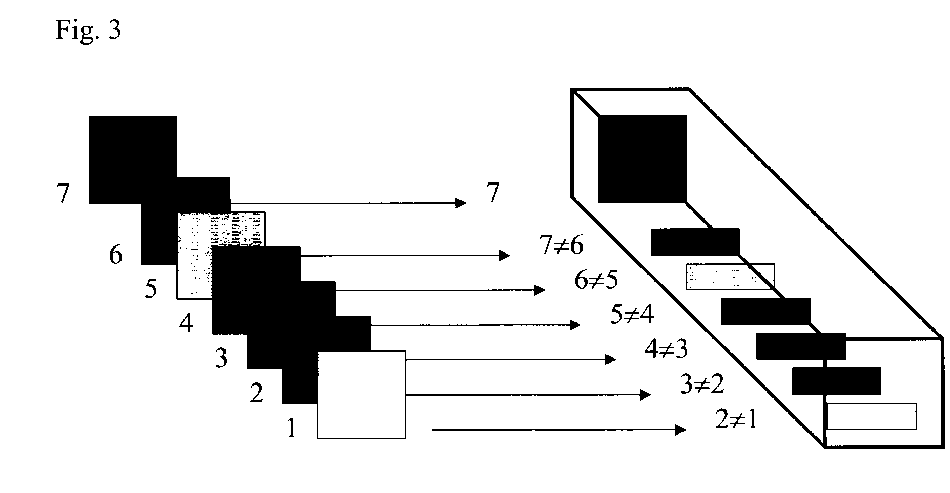

Fig. 3 shows an example for a prior art solution for the handling of different document versions. On the left side seven different versions of a document are shown. Version 7 is the newest or current version of the document and version 1 is the earliest version. The current version 7 is stored in its entirety in the storage sub-unit of the storage unit assigned to the document. The other versions 1 to 6 are not stored in their entirety. Only the differences between each version and its immediate predecessor version are stored. Therefore, the storage sub-unit also includes the differences between the first and the second version 2≠1, between the second and the third version 3≠2, between the third and the fourth version 4≠3, between the fifth and fourth version 5≠4, between the sixth and the fifth version 6≠5 and between the seventh and the sixth version 7≠6.

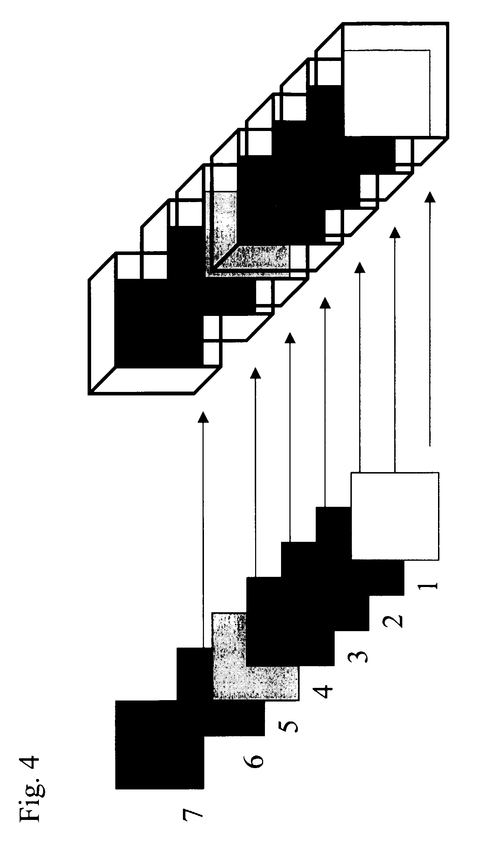

In contrast thereto, Fig. 4 shows the method for handling different versions of a document according to the present invention. Again, the left side shows the different versions 1 to 7 of the document, while the right side shows how the method handles these seven different versions. The newest or current version 7 is also stored in their entirety in a separate storage sub-units of the storage unit assigned to the document. But all other versions 1 to 6 will also be stored in their entirety in separate storage sub-units. In these storage sub-units all relevant information about this document version will be stored separately, as it was explained earlier with regard to Fig. 2 for the first document version.

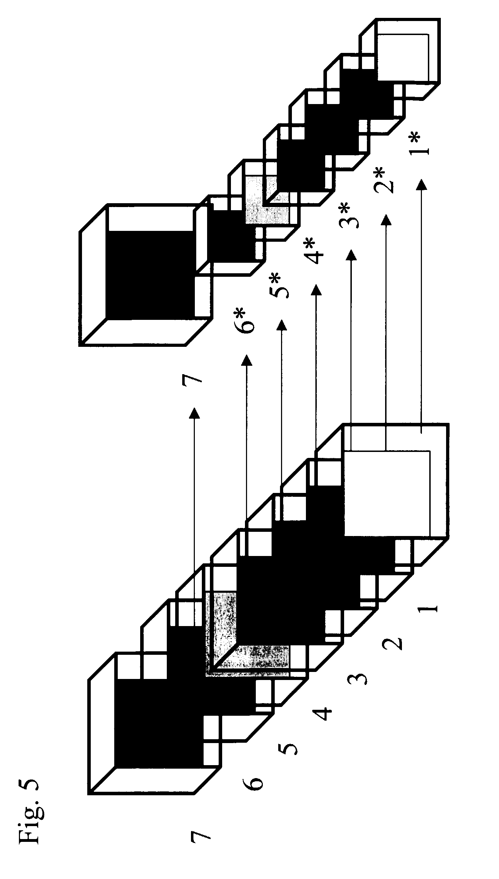

In another embodiment of the present invention the earlier version of the document will be compressed by a corresponding program. Fig. 5 shows this step of compressing for the example of Fig. 4. Each earlier version of the document will be compressed, for example version 1 to the compressed version 1*, as soon as a newer version is created. This will reduce the required storing space substantially. Common compressing applications allow to compress the data up to a quarter of its original scope.

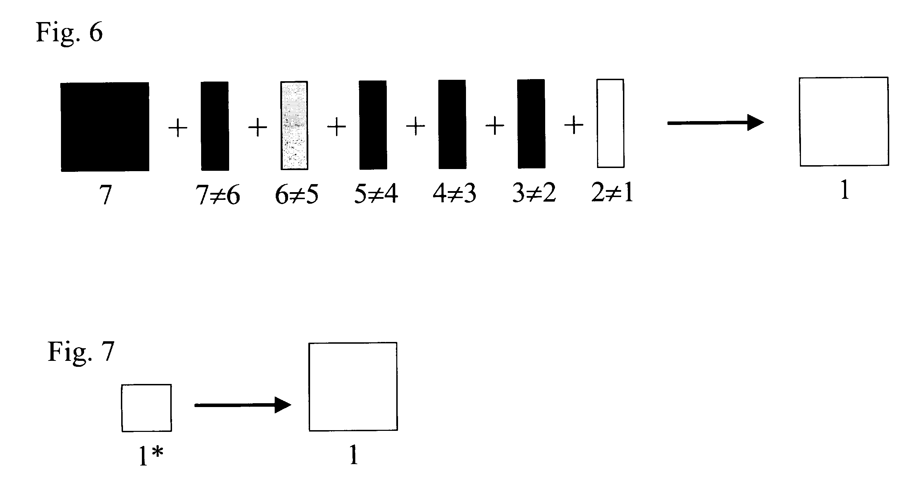

One advantage of the method of handling different document versions according to the present invention is shown in Figs. 6 and 7. In Fig. 6 the way of retrieving the first earlier version 1 by a prior art solution according to Fig. 3 is explained. In this example the current seventh version 7, the differences between the seventh and the sixth version 7≠6, the differences between the sixth and the fifth version 6≠5, differences between the fifth and the fourth version 5≠4, differences between the fourth and the third version 4≠3, differences between the third and the second version 3≠2 and the differences between the second and the first version 2≠1 have to be opened. Then the current seventh version has to integrate the differences between the seventh and the sixth version 7≠6 and then step by step the differences to the other versions. This solution is laborious and time consuming, since several steps have to be carried out. Furthermore, if the current version or any differences of the versions among each other are not properly retrievable the desired first version cannot be restored. In the case of- nowadays more and more occurring - huge numbers of versions of a document to be stored this dependency is a serious factor of risk.

Fig. 7 shows the proceeding of retrieving an earlier version of the document by employing the solution according to the present invention, as it was described in relation to Figs. 4 and 5. Another embodiment of this solution teaches to store the earlier versions in separate storage sub-units in a compressed way. Fig. 6 shows the compressed first version 1* of the document. In case the user wants to retrieve document version 1 there is only one step to carry out. The content of the storage sub-unit for version 1 only has to be decompressed. This provides not only fast, but also secure access to different document versions. With the idea of compression and decompression of the various document versions even storage space consumption is limited.

In another embodiment of the present invention a user who opens the document can see in a listing which user worked on this document. He may also open earlier versions very quickly, and he can compare these versions in an advantageous way. The mentioned listing may be implemented in the form of a drop-down list, that means a list which is created on demand of the user, for example in response to a mouse-click, by displaying the listing below the generic information about the document. The content of the listing may also be freely chosen by the user.

The user will quickly recognize when opening any earlier versions of his document that this retrieval of the document is carried out much faster than presently possible. In addition he will note the advantage of an independency of the current version and the earlier versions with respect to quality of storage, for example if problems occurred during storing of any earlier version. In this case, the invention allows to retrieve the newer versions completely in full quality - provided that they themselves were stored properly -, whereas the prior art solutions would not be able to restore any other newer versions.

Therefore, the present invention provides an advantageous solution to the problem of handling documents existing in different versions. The advantages of the invention are in particular faster and more secure document version retrieval.

## Claims

1. A method for handling different versions of a document in a computer system comprising a storage medium, wherein said different versions include one current version and at least one earlier version, said method comprising the following steps:
a) assigning a storage unit in said storage medium of said computer system for storing said document,
b) saving said current version of said document in a current version storage sub-unit of said storage unit assigned for storing said document,
c) saving each of said earlier versions of said document in a corresponding earlier version storage sub-unit of said storage unit assigned for storing said document, wherein each of said earlier versions is saved in its entirety in said corresponding earlier version storage sub-unit.

2. A method according to claim 1, wherein historic information about said current version is saved in said current version storage sub-unit and historic information about each of said earlier versions is saved in said corresponding earlier version storage sub-units.

3. A method according to claim 2, wherein said historic information about each of said different versions contains at least its saving date.

4. A method according to claims 2 or 3, comprising the further steps of displaying on demand of a user of said computer system a listing showing at least said historic information about said different versions of said document, and loading any of said different versions of said document for further processing in response to said user's choice from said listing.

5. A method according to any of the preceding claims, wherein said earlier versions of said document are each saved in a compressed form in said corresponding earlier version storage sub-units.

6. A method according to any of the preceding claims, comprising the further step of identifying and displaying amendments in any of said different versions of said document on demand of a user.

7. A method according to claims 6 or 7, wherein said amendments are displayed together with the date of said amendments.

8. A method according to claim 6, wherein said step of identifying and displaying amendments comprises the identification and display of the author of said amendments.

9. A computer program for carrying out a method according to any of the preceding method claims on a computer system.

10. A data carrier for storing a computer program for carrying out a method according to any of the preceding method claims on a computer system.

11. A method for using a computer system for carrying out a method according to any of the preceding method claims.

12. A computer system comprising a storage medium on which a computer program for carrying out a method according to any of the preceding method claims is stored.
